# EUROPÄISCHE PATENTSCHRIFT

(11) **EP 2 139 727 B1**
(45) Veröffentlichungstag und Bekanntmachung des Hinweises auf die Patenterteilung: **08.12.2010**
(21) Anmeldenummer: 08735443.7
(22) Anmeldetag: 20.03.2008
(51) Int. Cl.: B60R 21/18

(54) **BEFESTIGUNGSANORDNUNG SOWIE WERKZEUG ZUM VERRIEGELN EINES BEFESTIGUNGSELEMENTES**
ATTACHMENT ARRANGEMENT AND TOOL FOR LOCKING AN ATTACHMENT ELEMENT
DISPOSITIF DE FIXATION ET OUTIL DE VERROUILLAGE D'UN ÉLÉMENT DE FIXATION

(30) Priorität: 23.03.2007 DE 202007004549 U
(43) Veröffentlichungstag der Anmeldung: 06.01.2010
(73) Patentinhaber: Takata-Petri AG, 63743 Aschaffenburg (DE)
(72) Erfinder: BAUMGARTNER, Peter, 89312 Günzburg (DE); SCHUMACHER, Bernd, 89171 Illerkirchberg (DE)
(74) Vertreter: Staroske, Sandro
(86) Internationale Anmeldenummer: PCT/EP2008/053355
(87) Internationale Veröffentlichungsnummer: WO 2008/116817

(56) Entgegenhaltungen:
- EP-A- 0 696 530
- WO-A-02/28690
- DE-A1- 10 357 448
- DE-U1-202004 014 219
- US-A- 3 864 789
- US-B1- 6 353 981

## Beschreibung

Die Erfindung betrifft eine Befestigungsanordnung mit einer Haltestruktur und einem Befestigungselement zum Befestigen eines Teils an der Haltestruktur sowie ein Werkzeug zum Herstellen einer Befestigungsanordnung.

Es ist insbesondere für aufblasbare Gassäcke eines Fahrzeuginsassen-Rückhaltesystems bekannt, zum Befestigen des Gassacks bzw. eines den Gassack aufweisenden Gassackmoduls Befestigungselemente zu verwenden, die in Öffnungen einer Haltestruktur (z. B. eines Teiles der Fahrzeugkarosserie) verrasten. Derartige Befestigungselemente sind z.B. in der WO 02/28 690 A1 beschrieben.

Aus der DE 20 2004 014 219 U1 ist ein gattungsgemäße Befestigungsanordnung bekannt, das zum Befestigen eines Teils außen an einer Trägerwand hierzu in eine Öffnung der Trägerwand einsetzbar ist. Das Befestigungselement ist derart ausgestattet, dass es bei einem Einsetzen in die Öffnung diese durchgreift und bei Erreichen einer vorgegebenen Endlage an der Trägerwand verriegelt und ein Herausziehen des Befestigungselementes aus der Öffnung unterbindet. Das Befestigungselement liegt dabei im verriegelten Zustand an beiden Seiten der Trägerwand an und zwar mit einem Anschlagelement außen an der Trägerwand und mit einem Schnappelement an der anderen, dem zu befestigenden Teil abgewandten Seite der Trägerwand. Mit dem Schnappelement steht ein Entriegelungselement in Verbindung, das von außen zugänglich ist und ein Entriegeln des Schnappelementes und ein herausziehen des Befestigungselementes aus der Öffnung ermöglicht.

Das der vorliegenden Erfindung zugrunde liegende Problem besteht darin, eine Befestigungsanordnung mit einer Haltestruktur und einem Befestigungselement sowie ein Werk zeug anzugeben, mit denen eine sichere Montage des Befestigungselementes an der Haltestruktur möglich ist.

Dieses Problem wird durch die Befestigungsanordnung gemäß Anspruch 1 sowie durch das Werkzeug gemäß Anspruch 12 gelöst. Weiterbildungen der Erfindung sind in den abhängigen Ansprüchen angegeben.

Danach ist eine Befestigungsanordnung vorgesehen, mit
- einem in die Öffnung einzuführenden Befestigungselement, mit dem ein Teil an der Haltestruktur zu befestigen ist; und
- einem Verriegelungselement des Befestigungselementes zum Verriegeln des Befestigungselementes an der Haltestruktur, wobei das Verriegelungselement
- als Bestandteil des Befestigungselementes entlang einer Einführrichtung in die Öffnung der Haltestruktur bis zu einer Endposition einzuführen ist und in der Endposition die Öffnung derart hintergreift, dass es einem Herausziehen des Befestigungselementes aus der Öffnung entgegenwirkt und somit das Befestigungselement an der Haltestruktur verriegelt,
- mindestens einen ersten und einen zweiten Abschnitt aufweist, die beim Durchführen des Befestigungselementes durch die Öffnung nacheinander am Rand der Öffnung anliegen, so dass durch Einwirken des Randes der Öffnung eine Rückstellkraft entgegen der Einführrichtung auf das Befestigungselement wirkt, und
- der erste und der zweite Abschnitt derart ausgebildet und angeordnet sind, dass die Rückstellkraft auf das Befestigungselement beim Durchführen des zweiten Abschnitts durch die Öffnung größer ist als beim Durchführen des ersten Abschnitts durch die Öffnung.

Dadurch, dass auf den zweiten Abschnitt des Verriegelungselementes eine größere Rückstellkraft wirkt, kann eine Scheinverriegelung des Befestigungselementes in der Öffnung verhindert werden, da das Befestigungselement zumindest teilweise aus der Öffnung wieder herausspringt, sofern das Verriegelungselement nicht vollständig bis zu seiner Endposition in die Öffnung eingeführt und an der Haltestruktur verriegelt wurde. Eine nicht vollständige Montage des Befestigungselementes wird somit bemerkt und kann korrigiert werden.

In einer Ausführung des Befestigungselementes verlaufen der erste und der zweite Abschnitt des Verriegelungselementes relativ zur Einführrichtung abgewinkelt. Insbesondere kann der zweite Abschnitt des Verriegelungselementes stärker (nach außen) abgewinkelt sein als der erste Abschnitt, so dass der zweite Abschnitt im verriegelten Zustand des Befestigungselementes weiter über den Rand der Öffnung übersteht als der erste Abschnitt.

Der zweite Abschnitt ist beispielsweise - in Einführungsrichtung betrachtet - hinter dem ersten Abschnitt angeordnet und liegt somit im verriegelten Zustand des Befestigungselementes näher an einer Rückseite der Haltestruktur an als der erste Abschnitt, wobei die Rückseite der Haltestruktur durch eine Seite der Haltestruktur gebildet ist, die dem zu befestigenden Teil abgewandt ist. Der zweite Abschnitt des Verriegelungselementes wird somit nach dem ersten Abschnitt in die Öffnung der Haltestruktur eingeführt.

Das Befestigungselement kann eine Symmetrieachse, die parallel zur Einführrichtung verläuft, aufweisen. Hierbei kann z.B. das Verriegelungselement, das einen Bestandteil des Befestigungselementes bildet, zwei einander symmetrisch gegenüberliegende Arme besitzen oder z. B. zumindest abschnittsweise auch rotationssymmetrisch ausgebildet sein. Auf Ausgestaltungen des Verriegelungselementes wird näher weiter unten eingegangen. Eine symmetrische Ausgestaltung des Befestigungs- bzw. des Verriegelungselementes ist jedoch nicht unbedingt erforderlich. Insbesondere kann die Geometrie des Verriegelungselementes und weiterer Abschnitte des Befestigungselementes an eine Geometrie der Öffnung in der Haltestruktur angepasst sein, z. B. an eine runde, rechteckige oder auch an eine Öffnung mit komplizierterer, nicht unbedingt symmetrischer Kontur. Das Befestigungselement kann jedoch auch so ausgebildet sein, dass es für verschiedene Öffnungen, die unterschiedliche Kontoren aufweisen, verwendet werden kann; sich z.B. gleichzeitig für runde, ovale, recht-oder mehreckige Öffnungen eignet.

In einer Weiterbildung der Erfindung ist der erste Abschnitt unter einem ersten spitzen Winkel relativ zur Einführungsrichtung und der zweite Abschnitt unter einem zweiten spitzen Winkel relativ zur Einführungsrichtung abgewinkelt, wobei der zweite Winkel größer ist als der erste Winkel. Der zweite Abschnitt ist somit stärker nach außen (d.h. im verriegelten Zustand des Befestigungselementes von der Öffnung der Haltestruktur weg) abgebogen als der erste Abschnitt. Es versteht sich, dass sich der erste und der zweite Abschnitt - in Einführungsrichtung betrachtet - von einem Kopfabschnitt des Befestigungselementes, der beim Einführen des Befestigungselementes in die Öffnung zuerst eingeführt wird, nach hinten erstrecken.

Insbesondere ist der erste Abschnitt des Verriegelungselementes mit dem Kopfabschnitt des Befestigungselementes verbunden, wobei der zweite Abschnitt beispielsweise - von dem Kopfabschnitt her betrachtet - hinter dem ersten Abschnitt angeordnet ist und insbesondere einstückig mit dem ersten Abschnitt verbunden ist.

Darüber hinaus kann das Verriegelungselement derart biegbar mit einem Kopfabschnitt des Befestigungselementes verbunden sein, dass bei einem Abbiegen des Verriegelungselementes vom Kopfabschnitt (aus seiner Ruhelage heraus) eine Kraft auftritt, die dem Abbiegen entgegenwirkt. Eine Komponente dieser Kraft ruft, wenn das Verriegelungselement am Rand der Öffnung anliegt, die Rückstellkraft auf das Befestigungselement hervor.

Durch die federartige Verbindung mit dem Kopfabschnitt kehrt das Verriegelungselement bei vollständigem Durchführen durch die Öffnung, d.h. bei Erreichen seiner Endposition, in seine Ruhelage zurück, in der das Verriegelungselement über den Rand der Öffnung übersteht, und somit automatisch die Öffnung der Haltestruktur hintergreift (d.h. an der Haltestruktur verriegelt).

In einer anderen Weiterbildung der Erfindung weist das Befestigungselement zwei einander gegenüberliegende, z.B. im Wesentlichen strukturell identische, Arme auf, die beide im verriegelten Zustand des Befestigungselementes die Öffnung der Haltestruktur hintergreifen. Die Arme weisen jeweils einen ersten und einen zweiten Abschnitt auf, wobei der erste Abschnitt des Verriegelungselementes durch die ersten Abschnitte der Arme und der zweite Abschnitt des Verriegelungselementes durch die zweiten Abschnitte der Arme gebildet ist.

Beide Arme können beispielsweise jeweils einen ersten und einen zweiten relativ zur Einführungsrichtung abgewinkelten Abschnitt aufweisen, wobei der zweite Abschnitt jeweils stärker abgewinkelt ist und im verriegelten Zustand des Befestigungselementes weiter über den Rand der Öffnung übersteht als der jeweilige erste Abschnitt und das Befestigungselement an der Haltestruktur verriegelt.

Darüber hinaus können die beiden Arme ein Kopfende aufweisen, über das sie miteinander verbunden sind, so dass die miteinander verbundenen Kopfenden einen Kopfabschnitt des Befestigungselementes bilden, der beim Einführen in die Befestigungsöffnung zuerst in die Öffnung eingeführt wird.

Die Arme sind z.B. als Flachstück ausgebildet, das sich mit geringer Breite und Dicke entlang einer Haupterstreckungslinie, die auch gekrümmt verlaufen kann, erstreckt. Als Material für die Arme und für das Befestigungselement allgemein kommt z. B. Metall oder ein Kunststoff in Frage.

Die beiden über den Kopfabschnitt des Befestigungselementes verbundenen Arme erstrecken sich - vom Kopfabschnitt her gesehen - voneinander weg, d. h. sie weisen im Bereich eines vom Kopfabschnitt abgewandten Abschnittes einen größeren Abstand zueinander auf als angrenzend an den Kopfabschnitt, d. h. die beiden Arme verlaufen V-förmig voneinander weg. Zudem sind die Arme insbesondere nicht gegeneinander verdreht, d.h. sie erstrecken sich im Wesentlichen entlang einer gemeinsamen Ebene (z. B. auch symmetrisch zueinander), wobei die Ebene parallel zur Einführungsrichtung verläuft.

In einer anderen Weiterbildung der Erfindung weist das Befestigungselement ein Anschlagselement auf, das das Einführen des Befestigungselementes in die Öffnung der Haltestruktur begrenzt. Insbesondere liegt das Anschlagselement zumindest abschnittsweise an einer Seite der Haltestruktur, die dem befestigten Teil zugewandt ist, und/oder dem befestigten Teil an. Das Anschlagselement kann hierbei federartig ausgeführt sein, so dass - im verriegelten Zustand des Befestigungselementes - das Anschlagselement unter einer Vorspannung steht und z. B. das befestigte Teil gegen die Haltestruktur drückt.

Gleichzeitig kann das Anschlagselement mit einem Auflageabschnitt des Verriegelungselementes in Verbindung stehen, wobei der Auflageabschnitt - im verriegelten Zustand des Befestigungselementes - an einer dem Anschlagselement abgewandten Seite der Haltestruktur anliegt. Durch die Vorspannung des Anschlagselementes kann der Auflageabschnitt an die dem Anschlagselement abgewandte Seite der Haltestruktur gezogen werden, so dass der Halt des Befestigungselementes erhöht wird.

In einer weiteren Ausgestaltung der erfindungsgemäßen Befestigungsanordnung weist das Befestigungselement zwei Anschlagselemente auf, die jeweils einen ersten Abschnitt besitzen, der sich im Wesentlichen quer zur Einführungsrichtung erstreckt. Zudem weisen die Anschlagselemente jeweils mindestens einen zweiten Abschnitt auf, der relativ zu dem ersten Abschnitt in Einführungsrichtung abgewinkelt verläuft. Im verriegelten Zustand des Befestigungselementes sind die zweiten Abschnitte jeweils auf die Haltestruktur zu vom ersten Abschnitt abgewinkelt, wobei die ersten Abschnitte beispielsweise im Wesentlichen parallel zueinander und im Wesentlichen quer zur Einführungsrichtung verlaufen. Die zweiten Abschnitte können sich wiederum aus zwei oder mehreren Teilabschnitten zusammensetzen, die sich z. B. von gegenüberliegenden Seiten des ersten Abschnitts erstrecken und sich z. B. symmetrisch einander gegenüberliegen.

In einer weiteren Ausgestaltung ist der erste Abschnitt jeweils derart biegbar mit dem zweiten Abschnitt des Anschlagselementes verbunden, dass bei einem Abbiegen des ersten Abschnitts von dem zweiten Abschnitt eine Kraft auftritt, d. h. der erste mit dem zweiten Abschnitt federartig verbunden ist, so dass das Anschlagselement im verriegelten Zustand des Befestigungselementes unter Spannung an der Haltestruktur oder an dem befestigten Teil anliegen kann.

Die Anschlagselemente können insbesondere so ausgebildet sein, dass - vor dem Einführen des Befestigungselementes in die Öffnung - der zweite Abschnitt eines der Anschlagselemente stärker in Einführungsrichtung abgewinkelt ist als der zweite Abschnitt des anderen Anschlagselementes. Wird das Befestigungselement in die Öffnung der Haltestruktur eingeführt, weist somit der zweite Abschnitt des einen Anschlagselementes einen geringeren Abstand zur Haltestruktur auf als der zweite Abschnitt des anderen Anschlagselementes und wird vor dem zweiten Abschnitt des anderen Anschlagselements gegen die Haltestruktur gedrückt.

Beim Einführen des Befestigungselementes werden also die unterschiedlich stark abgewinkelten Abschnitte der Anschlagselemente der Reihe nach durchgedrückt, was das Montieren des Befestigungselementes erleichtert, da die zum Durchdrücken der Anschlagselemente Eindrücken erforderliche Kraft reduziert ist. Insbesondere kann dadurch die zum Eindrücken des Befestigungselementes in die Öffnung erforderliche Eindrückkraft (Montagekraft) zumindest näherungsweise konstant bleiben.

In einer anderen Ausführung der Erfindung ist das Befestigungselement so ausgebildet, dass es sich vorwiegend entlang einer Ebene, die quer zur Einführungsrichtung verläuft, erstreckt, um den Platzbedarf des Befestigungselementes zu reduzieren. Hierzu kann z. B. zum einen das Verriegelungselement entlang einer parallel zur Einführungsrichtung orientierten Ebene verlaufen, wobei die beiden Anschlagselement jeweils in Form eines Armes ausgebildet sind, dessen Hauptausdehnungsrichtung jeweils ebenfalls im Wesentlichen quer zur Einführungsrichtung und im Wesentlichen entlang dieser Ebene verläuft. Hierdurch ist die Ausdehnung des Befestigungselementes quer zur Einführungsrichtung auf einen Bereich eingeschränkt, der sich hauptsächlich entlang einer Ebene erstreckt und quer zu der Ebene eine geringe Ausdehnung besitzt.

In einer anderen Variante der Erfindung weist das Verriegelungselement einen Auflageabschnitt auf, der z. B. mit - wie oben bereits erwähnt - dem Anschlagselement verbunden sein kann. Insbesondere liegt der Auflageabschnitt im verriegelten Zustand des Befestigungselementes an einer Seite der Haltestruktur an, die dem befestigten Teil abgewandt ist. Dies kann so erfolgen, dass der Auflageabschnitt im verriegelten Zustand des Befestigungselementes die Öffnung der Haltestruktur ebenfalls hintergreift. Beispielsweise kann der Auflageabschnitt näherungsweise parallel zu der Seite der Haltestruktur verlaufen, an der er anliegt.

In einer weiteren Ausführungsform weist das Befestigungselement Mittel auf, die einem Verschieben des Auflageabschnitts relativ zur Haltestruktur entgegenwirken. Insbesondere wirken die Mittel einem Verschieben des Befestigungselementes in einer Richtung parallel zur Orientierung des Auflageabschnitts entgegen. Beispielsweise sind die Mittel als Struktur an einer der Haltestruktur zugewandten Seite des Auflageabschnitts ausgebildet, die die Reibung zwischen dem Auflageabschnitt und der Haltestruktur erhöht, z. B. in Form einer Mehrzahl von Vertiefungen in dem Auflageabschnitt.

Insbesondere ist das zu befestigende Teil ein Gassack oder ein Gassackmodul eines Fahrzeuginsassen-Rückhaltesystems und die Haltestruktur ein Fahrzeugteil (z.B. ein Teil einer Fahrzeugkarosserie). Beispielsweise kann das zu befestigende Teil ein Modulhalter zum Halten eines Gassackmoduls sein. Es wird darauf hingewiesen, dass natürlich auch mehr als ein Teil gleichzeitig mittels des Befestigungselementes festgelegt werden kann. Z.B. kann neben dem Modulhalter auch ein Abschnitt des Gassacks mittels des Befestigungselementes befestigt sein.

In einer weiteren Ausgestaltung verläuft der Modulhalter im Bereich des Befestigungselementes derart, dass er einem Verdrehen des Befestigungselementes entgegenwirkt. Beispielsweise kann das unbeabsichtigte Verdrehen eines montierten Befestigungselementes verhindert werden, wenn der Modulhalter mit einem Abschnitt so nahe am Befestigungselement verläuft, dass er das Befestigungselement blockiert, d. h. so angeordnet ist, dass das Befestigungselement bei einer gewissen Verdrehung gegen den Abschnitt des Modulhalters stoßen würde.

Das Befestigungselement kann ein - weiter oben beschriebenes - Anschlagselement aufweisen und der Modulhalter derart im Bereich des Anschlagselementes verlaufen, dass er das Anschlagselement blockiert, wodurch einem Verdrehen des Befestigungselementes entgegengewirkt wird.

Dass der Modulhalter dicht am Befestigungselement verläuft, hat neben dem Verdrehschutz den Vorteil, dass die Bauhöhe des montierten Gassackmoduls (Gassackmodul plus Modulhalter) so gering wie möglich ausfällt.

In einem zweiten Aspekt der Erfindung wird ein Werkzeug zum Herstellen einer Befestigungsanordnung angegeben, das aufweist:
- ein Einführelement zum Einführen eines Befestigungselementes in eine Öffnung der Haltestruktur, wobei
- das Einführelement mindestens eine Aussparung aufweist, in die sich ein Abschnitt des Befestigungselementes hineinbewegen kann, der beim Einführen des Befestigungselementes in die Öffnung durch Einwirken des Randes der Öffnung auf das Einführelement zu bewegt (z. B. gebogen) wird.

Die Aussparung kann insbesondere eine Öffnung im Wesentlichen entlang der der Einführungsrichtung verlaufenden Seitenfläche des Einführelementes aufweisen, so dass insbesondere durch eine Bewegung senkrecht zur Einführungsrichtung ein Abschnitt des Befestigungselementes in die Aussparung hineinbewegt werden kann. Beispielsweise ist die Aussparung als im Wesentlichen quer zur Einführungsrichtung verlaufende Durchgangsöffnung ausgebildet. Des Weiteren ist es möglich, das Einführelement als Hohlkörper zu verwirklichen, wobei die Aussparung als Teil des Hohlraums, der über eine Öffnung in einer Seitenwand des Hohlkörpers zugänglich ist, ausgebildet ist.

Mit dem Werkzeug ist es insbesondere möglich, ein wie oben beschriebenes Befestigungselement zu montieren, das z.B. ein armartiges Verriegelungselement aufweist, wobei sich von zumindest einem Arm des Verriegelungselementes eine Struktur erstreckt, die beim Einführen des Befestigungselementes mit dem Werkzeug auf das Einführelement des Werkzeuges zu gedrückt wird. Insbesondere kann eine derartige Struktur im verriegelten Zustand des Befestigungselementes auf die Öffnung in der Haltestruktur zu weisen oder diese durchgreifen.

Ein Beispiel für eine derartige Struktur ist ein Auflageabschnitt des Befestigungselementes, mit dem das Befestigungselement im verriegelten Zustand an einer dem befestigten Teil abgewandten Seite anliegt, oder ein Entriegelungselement, das im verriegelten Zustand des Befestigungselementes die Öffnung der Haltestruktur durchgreift und von außen, d. h. von einer dem befestigten Teil zugewandten Seite der Haltestruktur, zugänglich ist, wobei durch Bewegen (Zusammendrücken) des Entriegelungselementes das Befestigungselement entriegelt werden kann.

Die Erfindung wird im Folgenden anhand von Ausführungsbeispielen unter Bezugnahme auf die Figuren näher erläutert. Es zeigen:
- Figuren 1A und 1 B: ein erfindungsgemäßes Befestigungselement;
- Figuren 2A und 2B: eine Variante der erfindungsgemäßen Befestigungsanordnung;
- Figuren 3A und 3B: eine zweite Variante der erfindungsgemäßen Anordnung;
- Figuren 4A und 4B: eine dritte Variante der erfindungsgemäßen Anordnung;
- Figuren 5A und 5B: eine vierte Variante der erfindungsgemäßen Anordnung;
- Figur 6: eine Ausführungsform des erfindungsgemäßen Werkzeuges;
- Figur 7: das Werkzeug der Fig. 6 beim Befestigen eines Befestigungs- elementes.

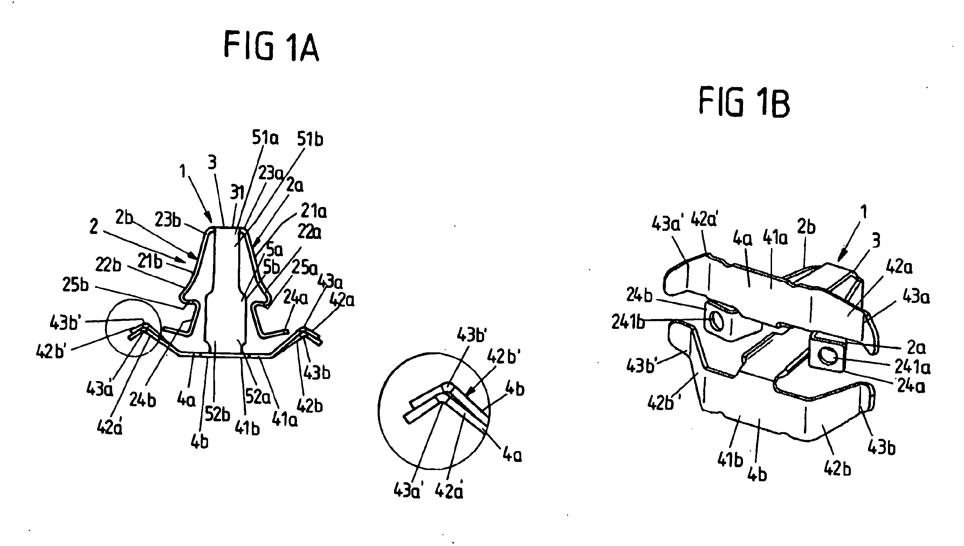

Die Figuren 1A und 1B zeigen eine Variante des erfindungsgemäßen Befestigungselementes in einer Seitenansicht bzw. in einer perspektivischen Ansicht. Gemäß Figur 1A weist ein Befestigungselement 1 ein Verriegelungselement 2 auf, das zum Verriegeln des Befestigungselementes 1 an einer Haltestruktur (nicht dargestellt) dient und entlang einer Einführrichtung in eine Öffnung der Haltestruktur einzuführen ist. Das Verriegelungselement 2 bildet zwei einander gegenüberliegende Arme 2a, 2b aus, wobei die Arme 2a, 2b in Bezug zu einer parallel zur Einführrichtung des Befestigungselementes durch die Mitte des Befestigungselementes verlaufenden Symmetrieachse des Befestigungselementes zueinander symmetrisch ausgebildet sind.

Die beiden Arme 2a, 2b weisen jeweils einen ersten Abschnitt 21a, 21b sowie einen sich dem ersten Abschnitt 21a, 21b einstückig anschließenden zweiten Abschnitt 22a, 22b auf, wobei die ersten Abschnitte 21a, 21b und die zweiten Abschnitte 22a, 22b jeweils nach außen abgewinkelt zur Einführrichtung des Befestigungselementes verlaufen, d.h. die Arme 2a, 2b erstrecken sich voneinander weg. Die jeweiligen zweiten Abschnitte 22a, 22b sind relativ zu der Einführrichtung stärker nach außen abgewinkelt als die ersten Abschnitte 21a, 21b, so dass sie im verriegelten Zustand des Befestigungselementes weiter über den Rand der Öffnung in der Haltestruktur überstehen (in der Ebene der Öffnung betrachtet) und der. Die ersten Abschnitte 21a, 21b schließen daher jeweils mit den zweiten Abschnitten 22a, 22b, bezogen auf eine der Mitte des Befestigungselementes abgewandte Seite der Abschnitte 21a, 21b und 22a, 22b, einen Winkel w ein, der kleiner als 180° ist.

Die zweiten Abschnitte 22a, 22b sind - in Einführrichtung betrachtet - hinter den ersten Abschnitten 21a, 21b angeordnet, so dass die Abschnitte 21a, 21b und 22a, 22b beim Einführen des Befestigungselementes nacheinander, d.h. die zweiten Abschnitte 22a, 22b nach den ersten Abschnitten 21a, 21b, an dem Rand der Öffnung anliegen. Wenn das Verriegelungselement bis zu seiner Endposition in die Öffnung eingeführt ist, hintergreifen die Arme 2a, 2b mit den ersten und zweiten Abschnitten 21a, 21b und 22a, 22b die Öffnung und verhindern ein Herausrutschen des Befestigungselementes aus der Öffnung, d. h. die Arme 2a, 2b verriegeln an der Haltestruktur. Die zweiten Abschnitte 22a, 22b stellen im verriegelten Zustand des Befestigungselementes jeweils der Haltestruktur zugewandte Abschnitte der Arme 2a, 2b dar.

Die Arme 2a, 2b sind an einem Ende 23a bzw. 23b miteinander verbunden und bilden in diesem Bereich einen Kopfabschnitt 3 des Befestigungselementes 1 aus. Der Kopfabschnitt 3 weist einen im Wesentlichen senkrecht zur Einführrichtung des Befestigungselementes orientierten Teilbereich 31 auf, von denen die Arme 2a, 2b jeweils biegbar abstehen. Dadurch, dass die ersten und zweiten Abschnitte 21a, 21b und 22a, 22b der Arme 2a, 2b gegenüber der Einführrichtung abgewinkelt verlaufen, werden sie beim Einführen des Befestigungselementes 1 in die Öffnung an den Rand der Öffnung gedrückt und federartig gegenüber dem Teilbereich 31 des Kopfabschnittes 3 aufeinander zu bewegt. Hierdurch tritt eine Federkraft auf, die mit einer Komponente eine Rückstellkraft auf das Befestigungselement entgegen der Einführrichtung ausübt. Die beiden Arme 2a, 2b werden beim Einführen in die Öffnung zusammengedrückt und spreizen wieder auseinander, wenn die Arme bis zu ihrer Endposition (d.h. der Endposition des Verriegelungselementes) in die Öffnung eingeführt wurden.

Die unterschiedlich starke Abwinklung relativ zur Einführrichtung der ersten Abschnitte 21a, 21b verglichen mit der Abwinklung der zweiten Abschnitten 22a, 22b hat zur Folge, dass eine geringere Kraft aufgewendet werden muss, um die ersten Abschnitte 21a, 21b durch die Öffnung hindurchzuführen (einzudrücken) als zum Durchführen der zweiten Abschnitte 22a, 22b erforderlich ist. Entsprechend wirkt beim Durchführen der ersten Abschnitte 21a, 21b durch die Öffnung eine geringere Rückstellkraft auf das Befestigungselement als beim Durchführen der zweiten Abschnitte 22a, 22b. Somit wirkt auf das Befestigungselement eine geringere Rückstellkraft, wenn ein erster Abschnitt des Verriegelungselementes, der durch die ersten Abschnitte 21a, 21b der Arme 2a, 2b gebildet ist, durch die Öffnung durchgeführt wird, als beim Durchführen eines zweiten Abschnittes des Verriegelungselementes, der durch die zweiten Abschnitte 22a, 22b der Arme 2a, 2b gebildet ist.

Zum Beispiel kann die zum Eindrücken des Befestigungselementes in die Öffnung erforderliche Kraft auf 40 bis 50 N steigen, wenn die zweiten Abschnitte 22a, 22b der Arme 2a, 2b durch die Öffnung hindurchgeführt werden. Durch den stärker abgewinkelten Verlauf der zweiten Abschnitte 22a, 22b wird eine Scheinverriegelung des Befestigungselementes verhindert, da ein nicht vollständig, sondern nur bis in den Bereich des zweiten Abschnitts des Verriegelungselementes in die Öffnung eingeführtes Befestigungselement aufgrund der relativ großen Rückstellkraft, die es in dieser Position erfährt, wieder aus der Öffnung herausspringen würde.

An die zweiten Abschnitte 22a, 22b schließen sich jeweils Entriegelungselemente 24a, 24b zum Entriegeln des Befestigungselementes an, wobei die Entriegelungselemente 24a, 24b - vom Kopf 3 des Befestigungselementes 1 her betrachtet - hinter dem zweiten Abschnitt 22a, 22b angeordnet sind. Die Entriegelungselemente 24a, 24b werden zum Entriegeln der Arme 2a, 2b - und damit des Befestigungselementes 1 - zusammengedrückt, wodurch die Arme 2a, 2b ebenfalls aufeinander zu bewegt werden, bis sie die Öffnung der Haltestruktur nicht mehr hintergreifen und das Befestigungselement aus der Öffnung herausgezogen werden kann. Die Entriegelungselemente 24a, 24b weisen jeweils eine Öffnung 241a, 241b auf, die das Zusammendrücken der Entriegelungselemente 24a, 24b erleichtern, wobei z. B. mit einem entsprechend ausgebildeten Werkzeug in die Öffnungen 241a, 241b eingegriffen werden kann.

Die Arme 2a, 2b weisen zudem jeweils einen Auflageabschnitt 25a, 25b auf, der sich dem zweiten Abschnitt 22a, 22b abgewinkelt anschließt und im Wesentlichen senkrecht zur Einführrichtung des Befestigungselementes 1 verläuft. Das Befestigungselement 1 liegt im verriegelten Zustand (d. h., wenn das Befestigungselement an der Haltestruktur montiert ist) an einer Seite (Innenseite) der Haltestruktur an.

Darüber hinaus weist das Befestigungselement 1 zwei armartige Anschlagselemente 4a, 4b auf, die das Einführen des Befestigungselementes 1 begrenzen und z.B. so ausgebildet sind, dass ein Einführen des Befestigungselementes über die Endposition der Arme 2a, 2b hinaus verhindern. Hierzu weisen die Anschlagselemente 4a, 4b jeweils parallel zueinander verlaufende und sich im Wesentlichen quer zur Einführrichtung erstreckende erste Abschnitte 41a, 41b auf. An den ersten Abschnitt 41a, 41b schließen sich jeweils zweite Abschnitte in Form jeweils zweier gegenüberliegender Anschlagsflügel 42a, 42a' bzw. 42b, 42b an, die gegenüber den ersten Abschnitten 41a, 41b in Einführrichtung des Befestigungselementes abgewinkelt verlaufen.

Die Anschlagsflügel 42a, 42a' bzw. 42b, 42b' stehen jeweils von zwei einander gegenüberliegenden Seiten des ersten Abschnitts 41a bzw. 41b ab. Es wird darauf hingewiesen, dass die Anschlagsflügel 42a, 42a' bzw. 42b, 42b' jeweils auch direkt miteinander verbunden sein können, so dass das Anschlagselement keinen ersten (quer zur Einführrichtung verlaufenden) Abschnitt aufweisen muss. Die Anschlagsflügel 42a, 42a' bzw. 42b, 42b' weisen an ihren dem ersten Abschnitt 41a, 41b abgewandten Enden jeweils Krümmungen 43a, 43a' bzw. 43b, 43b' auf, die im verriegelten Zustand an der Haltestruktur anliegen.

Jedes der beiden Anschlagselemente weist einen Anschlagsflügel auf, der stärker in Einführrichtung von dem ersten Abschnitt abgewinkelt als der zweite Anschlagsflügel des Anschlagselementes, wobei der stärker abgewinkelte (abgebogene) Anschlagsflügel 42a des einen Anschlagselementes 4a dem stärker abgewinkelten Anschlagsflügel 42b' des anderen Anschlagselementes 4b (diagonal) gegenüber liegt (in einer Ebene senkrecht zur Einführrichtung betrachtet). Die beiden stärker abgewinkelten Anschlagsflügel der Anschlagselemente sind näherungsweise gleich stark vom jeweiligen Mittelabschnitt abgebogen, d.h. sie weisen näherungsweise den gleichen Winkel zur Einführrichtung auf. Die Anlagekrümmungen 43b, 43b' des Anschlagselementes 4b und die Krümmungen 43a, 43a' des Anschlagselementes 4a weisen daher - in Einführrichtung betrachtet - einen Abstand d zueinander auf; vgl. die Ausschnittsvergrößerung zur Figur 1A. Beim Einführen des Befestigungselementes in die Öffnung werden daher die Krümmungen 43a und 43b bzw. 43b' und 43a jeweils nacheinander gegen die Haltestruktur oder das zu befestigende Teil gedrückt, so dass die beiden Anschlagselemente nacheinander vorgespannt werden, was die hierfür notwendige Kraft, d.h. die Montagekraft für das Befestigungselement, reduziert. Diese Wirkung kann z.B. auch erzielt werden, wenn eines der Anschlagselemente zwei Anschlagsflügel ausbildet, die beide gegenüber den Anschlagsflügeln des anderen Anschlagselementes stärker in Einführrichtung abgebogen sind, so dass beide Anschlagsflügel des einen Anschlagselementes gegenüber den Abschlagsflügeln des anderen Anschlagselementes um einen Abstand in Einführrichtung vorstehen.

Die Anschlagselemente 4a, 4b sind jeweils mit einem sich entlang der Einführrichtung erstreckenden, armartig ausgebildeten Seitensteg 5a bzw. 5b verbunden. Die Seitenstege 5a, 5b wiederum erstrecken sich jeweils mit einem Ende 51a, 51b von dem Kopfabschnitt 3 des Befestigungselementes 1 weg, wobei sich an einer dem Kopfabschnitt 3 gegenüberliegenden Seite der Seitenstege 5a, 5b die Anschlagselemente 4a, 4b anschließen. Die Seitenstege 5a, 5b treffen etwa mittig auf die Anschlagselemente 4a, 4b.

Wie erwähnt, verlaufen die Arme 2a, 2b einander gegenüberliegend und weisen mit zunehmendem Abstand von dem Kopfabschnitt 3 einen größeren Abstand zueinander auf. Sie sind nicht gegeneinander verdreht, d.h. sie erstrecken sich entlang einer gemeinsamen, senkrecht zur Einführrichtung verlaufenden Ebene. Um den Platzbedarf für das Befestigungselement möglichst gering zu halten, sind die Anschlagselemente 4a, 4b sind in Bezug auf die Arme 2a, 2b so angeordnet, dass sie sich mit ihrer Haupterstreckungsrichtung ebenfalls entlang dieser Ebene erstrecken. Die (armartig ausgebildeten) Anschlagselemente 4a, 4b erstrecken sich dabei hauptsächlich in einer Richtung, in der sich die Verriegelungselemente von einander entfernen. Das Befestigungselement erstreckt sich daher insgesamt- senkrecht zur Einführrichtung betrachtet - hauptsächlich in nur eine Richtung.

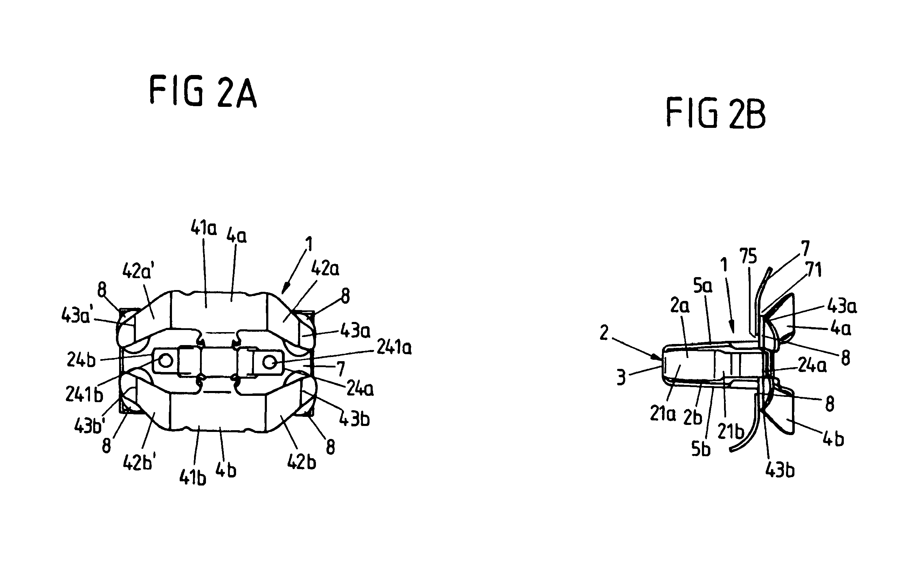

Die Figuren 2A und 2B zeigen das Befestigungselement der Figuren 1A und 1B als Bestandteil einer Befestigungsanordnung. Figur 2A zeigt das Befestigungselement 1 von unten, während Figur 2B das Befestigungselement 1 in einer Seitenansicht darstellt, wobei einer der Arme (2b) des Verriegelungselementes 2 dem Betrachter zugewandt ist. Wie insbesondere der Figur 2B zu entnehmen ist, durchgreift das Befestigungselement 1 mit den Armen 2a, 2b eine Öffnung 75 einer Haltestruktur 7 (z. B. eines Teils einer Fahrzeugkarosserie). Das Befestigungselement 1 ist so weit in die Öffnung 75 eingedrückt, dass die Anschlagselemente 4a, 4b jeweils mit mindestens einer Krümmung 43a, 43a' und 43b, 43b' der Anschlagsflügel 42a, 42a' bzw. 42b, 42b' an einer den Anschlagselementen 4a, 4b zugewandten Seite 71 der Haltestruktur 7 anliegen.

In dem Bereich zwischen der Seite 71 und den Anschlagselementen 4a, 4b würde ein Abschnitt eines mittels des Befestigungselementes zu befestigenden Teils (nicht dargestellt) verlaufen. Die Krümmungen 43a, 43a' und 43b, 43b' liegen jeweils in einen Auflagebereich 8 der Haltestruktur 7 an dieser an, wobei die Anschlagsflügel 42a, 42a' bzw. 42b, 42b' jeweils elastisch (federartig) mit den Mittelabschnitten (den ersten Abschnitten) 41a, 41b der Anschlagselemente 4a, 4b verbunden sind. Dadurch können die Anschlagselemente 4a, 4b vorgespannt werden, so dass die Krümmungen 43a, 43a' und 43b, 43b' im verriegelten Zustand des Befestigungselementes gegen die Haltestruktur 7 (bzw. gegen das zu befestigende Teil) drücken.

Während die Mittelabschnitte 41a, 41b der Anschlagselemente 4a, 4b näherungsweise parallel zueinander verlaufen, erstrecken sich jeweils ein Anschlagsflügel 42a bzw. 42a' des einen Anschlagselementes 4a und ein jeweils benachbarter Anschlagsflügel 42b bzw. 42b' des anderen Anschlagselements 4b aufeinander zu. Hierdurch weisen die Anschlagselemente 4a und 4b im Bereich der Krümmungen 43a, 43a', 43b, 43b' einen geringeren Abstand zueinander auf als im Bereich der mittleren Abschnitte 41a, 41b, weshalb auch die Auflageflächen 8 einen geringeren Abstand zueinander aufweisen als die Mittelabschnitte 41a, 41b.

Dies reduziert den Platzbedarf des Befestigungselementes, wobei das Befestigungselement im Bereich der Haltestruktur schmaler ist als im Bereich des zur Haltestruktur beabstandeten Mittelabschnitte der Anschlagselemente. Die Auflageflächen 8 liegen z.B. entlang einer Richtung gegenüber, in der auch die Arme 2a, 2b des Verriegelungselementes 2 einander gegenüber liegen. Insbesondere können die Anschlagsflügel so aufeinander zu verlaufen, dass sich bei Montage des Befestigungselementes an einer als Fahrzeugteil ausgebildeten, entlang der vertikalen Fahrzeugrichtung orientierten Haltestruktur die Auflageflächen im Wesentlichen seitlich, d.h. senkrecht zur vertikalen Fahrzeugrichtung, zur Öffnung der Haltestruktur befinden und nicht in vertikaler Fahrzeugrichtung über die Öffnung hinausragen.

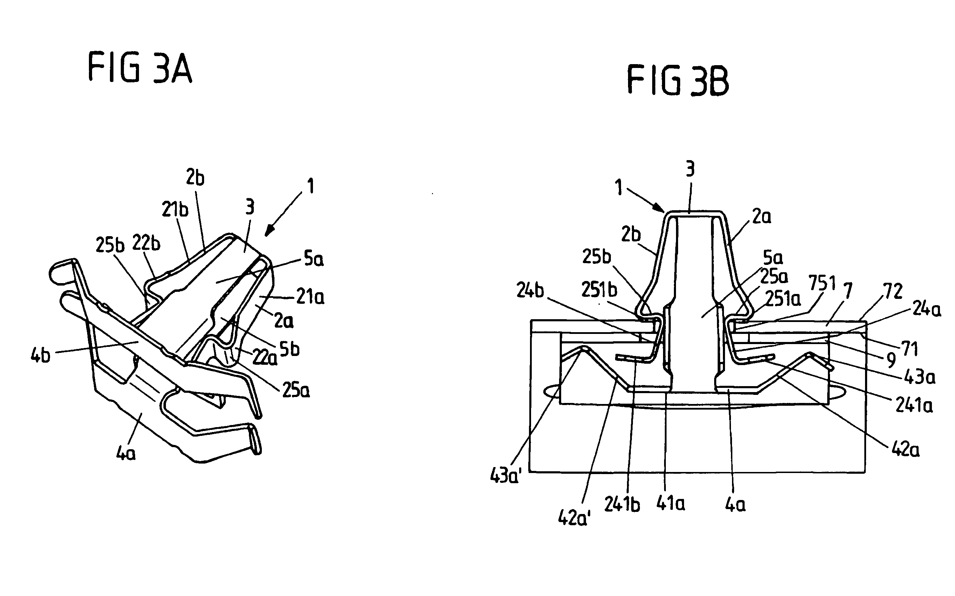

Die Figuren 3A und 3B betreffen eine weitere Variante der erfindungsgemäßen Befestigungsanordnung. Ein Befestigungselement 1 ist ähnlich dem Befestigungselement der Figuren 1A. 1B bzw. 2A. 2B ausgebildet und weist dementsprechend zwei einander gegenüberliegende Arme 2a. 2b auf, die jeweils einen ersten Abschnitt 21a, 21b sowie einen im Bezug zum ersten Abschnitt stärker abgewinkelten zweiten Abschnitt 22a, 22a haben. Von dem zweiten Abschnitt 22a, 22b erstreckt sich jeweils abgewinkelt ein Auflageabschnitt 25a, 25b, der im verriegelten Zustand des Befestigungselementes 1 - wie in Figur 3B dargestellt - annähernd parallel zu einer Seite 72 einer Haltestruktur 7 verläuft, die einem zu befestigenden Teil 9 abgewandt ist und an dieser Seite anliegt. Die Auflageabschnitte 25a, 25b liegen hierbei einander gegenüber und erstrecken sich aufeinander zu.

An die Auflageabschnitte 25a, 25b schließen sich Entriegelungselemente 24a, 24b, die die Öffnung 75 der Haltestruktur 7 durchgreifen, so dass ihre Betätigungsöffnungen 241a, 241b von außen, d. h. an einer Seite 72 der Haltestruktur 7, an der das Teil 9 befestigt ist und die der Seite 71 abgewandt ist, zugänglich sind.

An dem Befestigungselement 1 ist zudem eine Struktur 251a, 251b angeordnet, die die Reibung zwischen dem Auflageabschnitt 25a, 25b und der dem Auflageabschnitt 25b, 25b zugewandten Seite 72 der Haltestruktur 7 erhöht. Die Struktur 251a, 251b kann z. B. als eine Mehrzahl von Vertiefungen in dem Auflageabschnitt 25a, 25b, z.B. in Form einer Riffelung, ausgebildet sein, so dass beim Verschieben des Befestigungselementes in einer Richtung parallel zur Seite 72 der Haltestruktur 7 (d.h. quer zur Einführrichtung des Befestigungselementes) eine erhöhte Reibung auftritt, wodurch das Befestigungselement in seiner Verriegelungsposition stabilisiert wird.

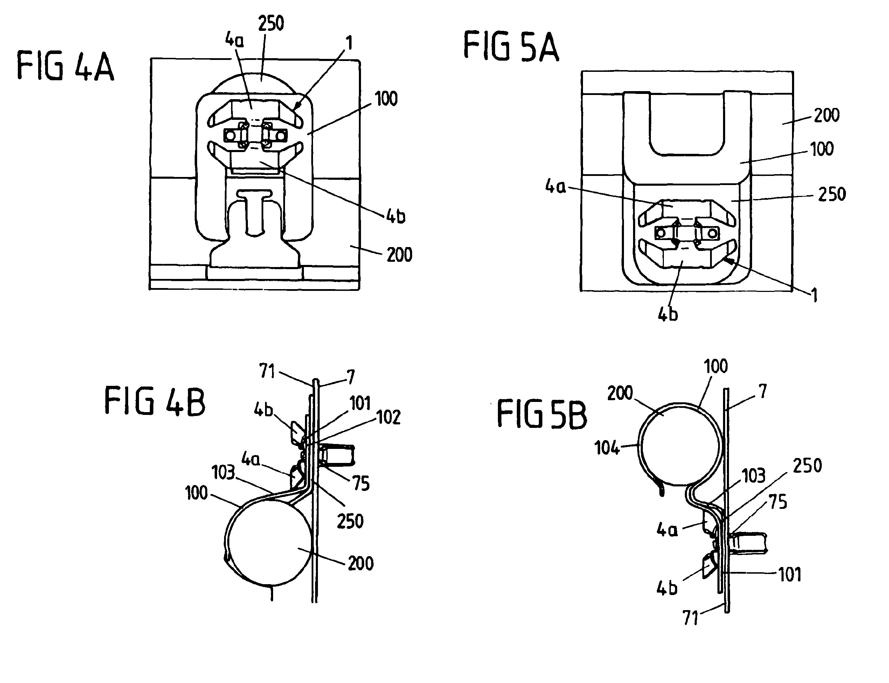

Die Figuren 4A und 4B zeigen eine dritte Variante der erfindungsgemäßen Anordnung, wobei Figur 4A eine Vorderansicht der Anordnung und Figur 4B eine Seitenansicht der Anordnung ist. Ein Befestigungselement 1, das z. B. gemäß der Figuren 1A, 1B ausgebildet sein kann, dient zum Befestigen eines Modulhalters 100 an einer Haltestruktur 7. Der Modulhalter 100 stellt eine Aufnahme für ein Gassackmodul 200 dar, wobei das Gassackmodul 200 einen aufblasbaren Gassack sowie einen Gasgenerator eines Fahrzeuginsassen-Rückhaltesystems umfasst. Der Befestigungsclip 1 durchgreift eine Öffnung 102 in einem Befestigungsabschnitt 101 des Modulhalters 100 sowie eine Öffnung 75 in der Haltestruktur 7 und legt den Modulhalter 100 dadurch an der Haltestruktur 7 fest. Zudem ist gleichzeitig ein Abschnitt 250 des Gassacks des Gassackmoduls mittels des Befestigungselementes an der Haltestruktur 7 festgelegt, wobei sie sich zwischen dem Modulhalter 100 und der Haltestruktur 7 erstreckt.

Der Befestigungsclip 1 weist armartige Anschlagselemente 4a, 4b auf, die parallel zu dem längserstreckten Gassackmodul 200 ausgerichtet sind. Während der Befestigungsabschnitt 101 des Modulhalters 100 im Bereich seiner Öffnung 102, die von dem Befestigungsclip 100 durchgriffen wird, im Wesentlichen parallel zu einer ihm zugewandten Seite 71 der Haltestruktur 7 verläuft, erstreckt sich ein weiterer Abschnitt 103 des Modulhalters abgewinkelt von der Haltestruktur 7 weg. Der Abschnitt 103 schließt sich dem Befestigungsabschnitt 101 an und verläuft derart im Bereich eines der Anschlagselemente 4a, 4b, dass bei dem Versuch, das Befestigungselement 1 in der Öffnung 75 zu drehen, das Anschlagselement 4a an den Abschnitt 103 des Modulhalters 100 anstoßen würde, so dass dieser das Anschlagselement 4a blockiert und einem Verdrehen des Befestigungsclips 1 in der Öffnung 75 entgegenwirkt.

Der Abstand s des Bereichs 103 zu dem Anschlagselement 4A ist so gewählt, dass das Befestigungselement 1 zumindest nicht stark verdreht werden kann, d.h. möglichst dicht an dem Befestigungselement verläuft. Dies hat den weiteren Vorteil, dass die Einbauhöhe h des Gassackmoduls einschließlich des Modulhalters 100 gering gehalten wird.

Während sich die Figuren 4A und 4B auf eine Anordnung beziehen, in der das Befestigungselement in der in ein Kraftfahrzeug eingebauten Anordnung oberhalb (bezogen auf die vertikale Fahrzeugrichtung) des Gassacksmoduls angeordnet ist, betreffen die Figuren 5A, 5B eine weitere Variante der erfindungsgemäßen Befestigungsanordnung, bei der das Befestigungselement unterhalb des Gassackmoduls angeordnet ist. Ähnlich den Figuren 4A, 4B ist ein Modulhalter 100 mittels eines Befestigungselementes 1 an einer Haltestruktur 7 eines Fahrzeugs befestigt. Der Modulhalter 100 dient wiederum dazu, ein Gassackmodul 200 aufzunehmen.

Ein Befestigungsabschnitt 101 des Modulhalters 103 verläuft analog zu den Figuren 4A und 4B im Bereich einer Öffnung 75 einer Haltestruktur 7, die von dem Befestigungselement 1 durchgriffen wird, nahezu parallel zu der Haltestruktur 7. Von dem Befestigungsabschnitt 101 knickt ein Abschnitt 103 von der Haltestruktur 7 weg ab. Der Abschnitt 103 verläuft in Bezug zu einem Anschlagselement 4a des Befestigungsclips derart, dass er das Anschlagselement 4a und damit den Befestigungsclip 1 blockiert und somit einem Verdrehen des Befestigungsclips 1 in der Öffnung 75 entgegenwirkt.

Der Modulhalter 100 bildet mit einem Aufnahmeabschnitt 104 die Aufnahme für das Gassackmodul 200, in dem sich der Abschnitt 104 der Form des Gassackmoduls 200 folgend um diesen herum erstreckt.

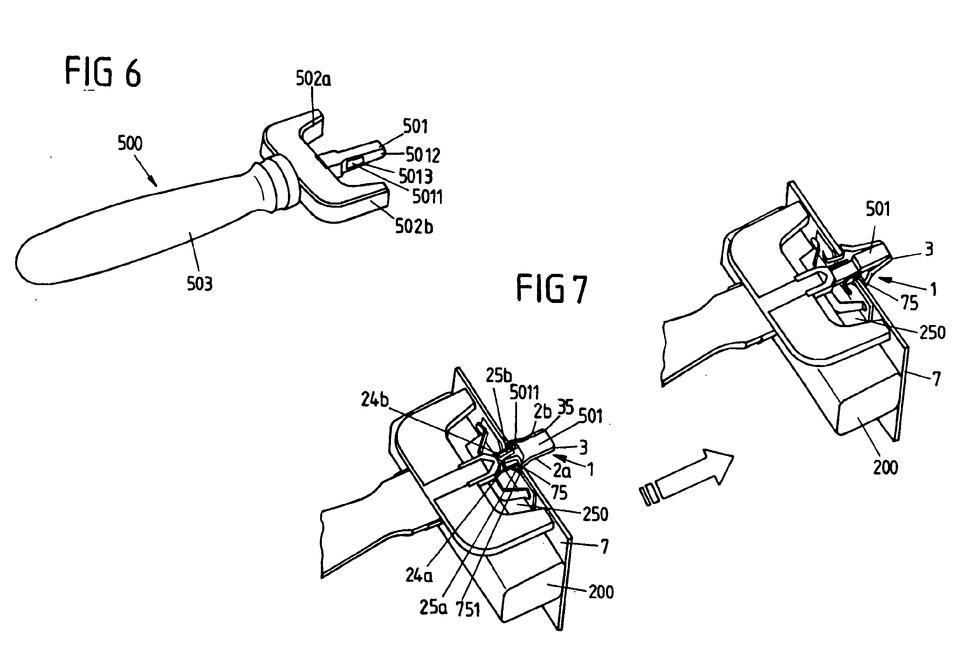

Die Figuren 6 und 7 betreffen eine Ausführungsform des erfindungsgemäßen Werkzeuges zum Verriegeln eines Befestigungselementes an einer Haltestruktur. Ein Werkzeug 500 weist ein Einführelement in Form eines länglichen, mittleren Zinkens 501 auf. Zum Einführen des Befestigungselementes in eine Öffnung wird der Zinken 501 so in das Befestigungselement eingeführt, dass er in Einführrichtung gegen einen Abschnitt (z.B. gegen einen Kopfabschnitt) des Befestigungselementes (vgl. Schnittansicht des Werkzeugs in Figur 7) drückt und das Befestigungselement somit in die Öffnung hinein bewegt werden kann, bis es an der Haltestruktur verriegelt.

Durch den mittleren Zinken 501 hindurch erstreckt sich näherungsweise senkrecht zur Einführrichtung und zu einer Seitenwand 5013 des mittleren Zinkens 501 eine Durchgangsöffnung 5011, die eine Aussparung darstellt, in die sich ein Abschnitt des Befestigungselementes hineinbewegen kann, der beim Einführen des Befestigungselementes mittels des Werkzeuges durch Einwirken des Randes der Öffnung auf das Einführelement zugebogen wird. Dies ist in der Figur 7 dargestellt. Der mittlere Zinken 501 des Werkzeuges 500 greift in Einführrichtung in den Befestigungsclip 1 ein, so dass eine Stirnseite 5012 des mittleren Zinkens 501 gegen eine Seite 35 eines Kopfabschnittes 3 des Befestigungselementes 1 drückt und das Befestigungselement 1 somit in Einführrichtung in die Öffnung 75 der Haltestruktur 7 drückt.

Beabstandet zu dem mittleren Zinken 501 sind zwei einander gegenüberliegende Anschlagszinken 502a, 502b angeordnet, die verhindern, dass das Befestigungselement mittels des Werkzeuges 500 zu weit in eine Öffnung eingeführt wird. Zudem weist das Werkzeug 500 einen Handgriff 503 zum Handhaben des Werkzeuges auf.

Beim Einführen des Befestigungselementes 1 werden Arme 2a, 2b eines Verriegelungselementes des Befestigungselementes 1 und mit den Armen 2a, 2b verbundene weitere Abschnitte des Befestigungselementes 1 zusammengedrückt, d. h. näherungsweise senkrecht zur Einführrichtung aufeinander zu und daher in Richtung auf den mittleren Zinken 501 abgebogen. Insbesondere werden von den Armen 2a, 2b nach innen (d. h. aufeinander zu) abstehende Auflageabschnitte 25a, 25b oder Entriegelungselemente 24a, 24b auf den mittleren Zinken 501 zu abgebogen, so dass sie sich in die Durchgangsöffnung 5011 des mittleren Zinkens 501 hinein bewegen.

Dadurch können die Arme 2a, 2b beim Durchführen durch die Öffnung 75 näherungsweise parallel zur Einführrichtung (d. h. parallel zu Seitenwänden des Randes der Öffnung 75) ausgerichtet werden und das Befestigungselement bis zur Endposition des Verriegelungselementes in die Öffnung 75 eingeführt werden. Ist das Befestigungselement vollständig durch die Öffnung 75 hindurchgeführt, spreizen die Arme 2a, 2b auseinander und verriegeln an der Haltestruktur 7. Dies ist der Fall, wenn die Anschlagszinken 502a, 502b des Werkzeugs 500 an einer Seite 71, die dem zu befestigenden Teil 9 zugewandt ist, anliegen. Das zu befestigende Teil ist im Fall der Figur 7 ein Gassackmodul 200, das einen Gassack aufweist, von dem ein Abschnitt 250 durch das Befestigungselement 1 an der Haltestruktur 7 festgelegt wird.

Dadurch, dass bis zum vollständigen Verriegeln der Arme 2a, 2b an der Haltestruktur die Auflageabschnitte 25a, 25b und die Entriegelungselemente 24a, 24b noch in die Durchgangsöffnung 5011 des mittleren Zinkens 501 eingreifen, wird ein nicht korrekt in die Öffnung eingeführtes Befestigungselement beim Herausziehen des Werkzeug wieder aus der Öffnung herausgezogen. Hierdurch kann eine unvollständige Montage des Befestigungselementes bemerkt und vermieden werden.

### Bezugszeichenliste

- 1: Befestigungselement
- 2a, 2b: Arm
- 21a, 21b: erster Abschnitt
- 22a, 22b: zweiter Abschnitt
- 23a, 23b: Kopfende
- 24a, 24b: Entriegelungselement
- 241a, 241b: Öffnung
- 25a, 25b: Auflageabschnitt
- 251a,251b: Struktur
- 3: Kopfabschnitt
- 31: Teilbereich
- 4a, 4b: Anschlagselement
- 41a, 41b: erster Abschnitt
- 42a, 42a', 42b, 42b': Anschlagsflügel
- 43a, 43a', 43b, 43b': Krümmung
- 5a, 5b: Seitensteg
- 51a,51b: Kopfende
- 52a, 52b: abgewandtes Ende
- 7: Haltestruktur
- 71: Seite
- 72: abgewandte Seite
- 75: Öffnung
- 751: Rand
- 8: Auflagefläche
- 100: Modulhalter
- 101: Befestigungsabschnitt
- 102: Öffnung
- 103: Abschnitt
- 104: Aufnahmeabschnitt
- 200: Gassackmodul
- 250: Abschnitt Gassack
- 500: Werkzeug
- 501: mittlerer Zinken
- 5011: Stirnseite
- 5012: Kopfende
- 5013: Seitenwand
- 502a, 502b: Anschlagszinken
- 503: Handgriff

## Patentansprüche

1. Befestigungselement zum Befestigen eines Teiles an einer Haltestruktur (7), wobei das Befestigungselement (1) in eine Öffnung (75) der Haltestruktur (7) einzusetzen ist und aufweist
- ein Verriegelungselement (2) des Befestigungselementes (1) zum Verriegeln des Befestigungselementes (1) an der Haltestruktur (7), wobei das Verriegelungselement (2)
- als Bestandteil des Befestigungselementes (1) entlang einer Einführrichtung in die Öffnung (75) der Haltestruktur (7) bis zu einer Endposition einzuführen ist und in der Endposition die Öffnung (75) derart hintergreift, dass es einem Herausziehen des Befestigungselementes (1) aus der Öffnung (75) entgegenwirkt und somit das Befestigungselement (1) an der Haltestruktur (7) verriegelt,
- mindestens einen ersten und einen zweiten Abschnitt (21a, 21b, 22a, 22b) aufweist, die beim Durchführen des Befestigungselementes (1) durch die Öffnung (75) nacheinander am Rand (751) der Öffnung (75) anliegen, so dass durch Einwirken des Randes (751) der Öffnung (75) eine Rückstellkraft entgegen der Einführrichtung auf das Befestigungselement (1) wirkt, **dadurch gekennzeichnet, dass**
- der erste und der zweite Abschnitt (21a, 21b, 22a, 22b) derart ausgebildet und angeordnet sind, dass die Rückstellkraft auf das Befestigungselement (1) beim Durchführen des zweiten Abschnitts (22a, 22b) durch die Öffnung (75) größer ist als beim Durchführen des ersten Abschnitts (21a, 21b) durch die Öffnung (75).

2. Befestigungselement nach Anspruch 1, **dadurch gekennzeichnet, dass** der erste und der zweite Abschnitt (21a, 21b, 22a, 22b) des Verriegelungselementes (2) relativ zur Einführrichtung abgewinkelt verlaufen.

3. Befestigungselement nach Anspruch 2, **dadurch gekennzeichnet, dass** der zweite Abschnitt (22a, 22b) stärker abgewinkelt ist als der erste Abschnitt (21a, 21b), so dass der zweite Abschnitt (22a, 22b) im verriegelten Zustand des Befestigungselementes (1) weiter über den Rand (751) der Öffnung (75) übersteht als der erste Abschnitt (21a, 21b).

4. Befestigungselement nach einem der vorhergehenden Ansprüche, **dadurch gekennzeichnet, dass** der erste Abschnitt (21a, 21b) des Verriegelungselementes (2) unter einem ersten spitzen Winkel relativ zur Einführrichtung abgewinkelt ist und der zweite Abschnitt (22a, 22b) unter einem zweiten spitzen Winkel relativ zur Einführrichtung abgewinkelt ist, der größer ist als der erste spitze Winkel.

5. Befestigungselement nach einem der vorhergehenden Ansprüche, **dadurch gekennzeichnet, dass** das Verriegelungselement (2) mit einem Kopfabschnitt (3) des Befestigungselementes (1) verbunden ist, der einen Abschnitt des Befestigungselementes (1) darstellt, der zuerst in die Öffnung (75) eingeführt wird.

6. Befestigungselement nach einem der vorhergehenden Ansprüche, **gekennzeichnet durch** zwei einander gegenüberliegende Arme (2a, 2b), die im verriegelten Zustand des Befestigungselementes (1) die Öffnung (75) der Haltestruktur (7) hintergreifen, wobei die Arme (2a, 2b) jeweils einen ersten und einen zweiten Abschnitt (21a, 21b, 22a, 22b) aufweisen und der erste Abschnitt des Verriegelungselementes (2) **durch** die ersten Abschnitte (21a, 21b) der Arme (2a, 2b) und der zweite Abschnitt des Verriegelungselementes (2) **durch** die zweiten Abschnitte (22a, 22b) der Arme (2a, 2b) gebildet ist.

7. Befestigungselement nach einem der vorhergehenden Ansprüche, **dadurch gekennzeichnet, dass** das Verriegelungselement (2) einen Auflageabschnitt (25a, 25b) aufweist, der im verriegelten Zustand des Befestigungselementes (1) an einer Seite (71) der Haltestruktur (7), die dem befestigten Teil (100) abgewandt ist, zumindest abschnittsweise anliegt.

8. Befestigungselement nach Anspruch 7, **dadurch gekennzeichnet, dass** der Auflageabschnitt (25a, 25b) im verriegelten Zustand des Befestigungselementes (1) die Öffnung (75) der Haltestruktur (7) hintergreift.

9. Befestigungselement nach Anspruch 7 oder 8, **dadurch gekennzeichnet, dass** der Auflageabschnitt (25a, 25b) an einen dem ersten Abschnitt (21a, 21b) des Verriegelungselementes (2) abgewandten Teilbereich des zweiten Abschnitts (22a, 22b) des Verriegelungselementes (2) angrenzt.

10. Befestigungselement nach einem der vorhergehenden Ansprüche, **dadurch gekennzeichnet, dass** das mittels des Befestigungselementes (1) an der Haltestruktur (7) zu befestigende Teil ein Gassack oder ein Gassackmodul (200) für ein Fahrzeuginsassen-Rückhaltesystem eines Kraftfahrzeuges und die Haltestruktur (7) ein Fahrzeugteil des Kraftfahrzeuges ist.

11. Befestigungselement nach einem der vorhergehenden Ansprüche, **dadurch gekennzeichnet, dass** das mittels des Befestigungselementes (1) an der Haltestruktur (7) zu befestigende Teil ein Modulhalter (100) zum Halten eines Gassackmoduls (200) ist.

12. Werkzeug zum Verriegeln eines Befestigungselementes nach einem der vorhergehenden Ansprüche an einer Haltestruktur, mit
- einem Einführelement (501) zum Einführen eines Befestigungselementes (1) in eine Öffnung (75) der Haltestruktur (7), wobei
- das Einführelement (501) mindestens eine Aussparung (5011) aufweist, in die sich ein Abschnitt (24a, 24b, 25a, 25b) des Befestigungselementes (1) hineinbewegen kann, der beim Einführen des Befestigungselementes (1) in die Öffnung (75) durch Einwirken des Randes (751) der Öffnung (75) auf das Einführelement (501) zu bewegt wird.

13. Werkzeug nach Anspruch 12, **dadurch gekennzeichnet, dass** die Aussparung (5011) eine Öffnung (5013) in einer Seitenfläche (5012) des Einführelementes (501) ausbildet.

14. Werkzeug nach Anspruch 12 oder 13, **dadurch gekennzeichnet, dass** die Aussparung (5011) als im Wesentlichen quer zur Einführrichtung verlaufende Durchgangsöffnung ausgebildet ist.

15. Werkzeug nach einem der Ansprüche 12 bis 14, **dadurch gekennzeichnet, dass** das Einführelement (501) als Hohlkörper ausgebildet ist.

## Claims

1. Attachment element for attaching a part to a mounting structure (7), wherein the attachment element (1) is to be inserted into an opening (75) of the mounting structure (7) and comprises
- a locking element (2) of the attachment element (1) for locking the attachment element (1) to the mounting structure (7), wherein the locking element (2)
- is to be inserted as a part of the attachment element (1) along an insertion direction into the opening (75) in the mounting structure (7) up to an end position and engages behind the opening (75) in the end position in such a way that it prevents removal of the attachment element (1) from the opening (75) and thus locks the attachment element (1) to the mounting structure (7),
- has at least a first and a second section (21a, 21b, 22a, 22b) that rest against the edge (751) of the opening (75) in succession when inserting the attachment element (1) through the opening (75), such that due to the action of the edge (751) of the opening (75) a return force opposite to the insertion direction acts on the attachment element (1),
**characterized in that**
the first and second sections (21a, 21b, 22a, 22b) are designed and arranged in such a way that the return force acting on the attachment element (1) during insertion of the second section (22a, 22b) through the opening (75) is larger than during insertion of the first section (21a, 21b) through the opening (75).

2. Attachment element according to claim 1, **characterized in that** the first and the second section (21a, 21b, 22a, 22b) of the locking element (2) continue angled relative to the insertion direction.

3. Attachment element according to claim 2, **characterized in that** the second section (22a, 22b) is stronger bent than the first section (21a, 21b) so that the second section (22a, 22b) in the locked state of the attachment element (1) protrudes further beyond the edge (751) of the opening (75) than the first section (21a, 21b).

4. Attachment element according to one of the preceding claims, **characterized in that** the first section (21a, 21b) of the locking element (2) is bent in a first acute angle relative to the insertion direction and the second section (22a, 22b) is bent in a second acute angle relative to the insertion direction, which is larger than the first acute angle.

5. Attachment element according to one of the preceding claims, **characterized in that** the locking element (2) is connected with a head section (3) of the attachment element (1), which constitutes a section of the attachment element (1) that is inserted at first into the opening (75).

6. Attachment element according to one of the preceding claims, **characterized by** two opposing arms (2a, 2b) which engage behind the opening (75) of the mounting structure (7) in the locked status of attachment element (1), wherein each one of the arms (2a, 2b) comprises a first and a second section (21a, 21b, 22a, 22b) and the first section of the locking element (2) is formed by the first sections (21a, 21b) of the arms (2a, 2b) and the second section of the locking element (2) is formed by the second sections (22a, 22b) of the arms (2a, 2b).

7. Attachment element according to one of the preceding claims, **characterized in that** the locking element (2) has a bearing section (25a, 25 b) which in the locked state of the attachment element (1) at least partially rests bears against a side (71) of the mounting structure (7) which faces away from the fixed part (100).

8. Attachment element according to claim 7, **characterized in that** the bearing section (25a, 25b) in the locked state of the attachment element (1) reaches behind the opening (75) of the mounting structure (7).

9. Attachment element according to claim 7 or 8, **characterized in that** the bearing section (25a, 25b) adjoins to a subarea of the second section (22a, 22b) of the locking element (2) which faces away from the first section (21a, 21b) of the locking element (2).

10. Attachment element according to one of the preceding claims, **characterized in that** the part which is to be fixed to the mounting structure (7) by the means of the attachment element (1) is an airbag or an airbag module (200) for a vehicle occupant restraint system of a vehicle and the mounting structure (7) is a vehicle component of a vehicle.

11. Attachment element according to one of the preceding claims, **characterized in that** the part which is to be fixed to the mounting structure (7) by the means of the attachment element (1) is a module holder (100) for holding an airbag module (200).

12. Tool for locking an attachment element according to one of the preceding claims to a mounting structure, comprising
- an inserting element (501) for inserting an attachment element (1) into an opening (75) of the mounting structure (75), wherein
- the inserting element (501) comprises at least one recess (5011) into which a section (24a, 24b, 25a, 25b) of the attachment element (1) can be moved, the section being moved towards the inserting element (501) during insertion of the attachment element (1) into the opening (75) by the impact of the edge (751) of the opening (75).

13. Tool according to claim 12, **characterized in that** the recess (5011) forms an opening (5013) in a side surface (5012) of the inserting element (501).

14. Tool according to one of the claims 12 or 13, **characterized in that** the recess (5011) is formed as a through opening which essentially continues crosswise to the insertion direction.

15. Tool according to one of the claims 12 to 14, **characterized in that** the inserting element (501) is formed as a hollow body.

## Revendications

1. Element de fixation avec pour la fixation d'une partie sur une structure de retenue (7), l'élément de fixation (1) étant à introduire dans une ouverture (75) de la structure de retenue (7) et présentant
- un élément de verrouillage (2) de l'élément de fixation (1) pour le verrouillage de l'élément de fixation (1) sur la structure de retenue (7), l'élément de verrouillage (2)
- étant à introduire comme constituant de l'élément de fixation (1) le long d'un sens d'introduction dans l'ouverture (75) de la structure de retenue (7) jusqu'à une position finale et dans la position finale, s'engageant derrière l'ouverture (75) de telle sorte qu'il agisse contre un retrait de l'élément de fixation (1) de l'ouverture (75) et ainsi verrouille l'élément de fixation (1) sur la structure de retenue (7),
- présentant au moins une première et une seconde section (21a, 21b, 22a, 22b) qui reposent lors du passage de l'élément de fixation (1) par l'ouverture (75) les unes après les autres sur le bord (751) de l'ouverture (75) de sorte que sous l'effet du bord (751) de l'ouverture (75), une force de rappel agisse à l'encontre du sens d'introduction sur l'élément de fixation (1), **caractérisé en ce que**
- la première et la seconde section (21a, 21b, 22a, 22b) sont réalisées et disposées de telle sorte que la force de rappel soit plus grande sur l'élément de fixation (1) lors du passage de la seconde section (22a, 22b) par l'ouverture (75) que lors du passage de la première section (21a, 21b) par l'ouverture (75).

2. Element de fixation selon la revendication 1, **caractérisé en ce que** la première et la seconde section (21a, 21b, 22a, 22b) de l'élément de verrouillage (2) s'étendent coudées par rapport au sens d'introduction.

3. Element de fixation selon la revendication 2, **caractérisé en ce que** la seconde section (22a, 22b) est coudée plus fortement que la première section (21a, 21b) de sorte que la seconde section (22a, 22b) continue à dépasser à l'état verrouillé de l'élément de fixation (1) le bord (751) de l'ouverture (75) par rapport à la première section (21a, 21b).

4. Element de fixation selon l'une quelconque des revendications précédentes, **caractérisé en ce que** la première section (21a, 21b) de l'élément de verrouillage (2) est coudée selon un premier angle aigu par rapport au sens d'introduction et la seconde section (22a, 22b) est coudée selon un second angle aigu par rapport au sens d'introduction, qui est plus grand que le premier angle aigu.

5. Element de fixation selon l'une quelconque des revendications précédentes, **caractérisé en ce que** l'élément de verrouillage (2) est relié à une section de tête (3) de l'élément de fixation (1) qui représente une section de l'élément de fixation (1) qui est tout d'abord introduite dans l'ouverture (75).

6. Element de fixation selon l'une quelconque des revendications précédentes, **caractérisé par** deux bras (2a, 2b) opposés qui s'engagent à l'état verrouillé de l'élément de fixation (1) derrière l'ouverture (75) de la structure de retenue (7), les bras (2a, 2b) présentant respectivement une première et une seconde section (21a, 21b, 22a, 22b) et la première section de l'élément de verrouillage (2) étant formée par les premières sections (21a, 21b) des bras (2a, 2b) et la seconde section de l'élément de verrouillage (2) étant formée par les secondes sections (22a, 22b) des bras (2a, 2b).

7. Element de fixation selon l'une quelconque des revendications précédentes, **caractérisé en ce que** l'élément de verrouillage (2) présente une section d'appui (25a, 25b) qui repose au moins par endroits à l'état verrouillé de l'élément de fixation (1) sur un côté (71) de la structure de retenue (7) qui est éloigné de la partie fixée (100).

8. Element de fixation selon la revendication 7, **caractérisé en ce que** la section d'appui (25a, 25b) s'engage à l'état verrouillé de l'élément de fixation (1) derrière l'ouverture (75) de la structure de retenue (7).

9. Element de fixation selon la revendication 7 ou 8, **caractérisé en ce que** la section d'appui (25a, 25b) est contigüe à une zone partielle éloignée de la première section (21a, 21b) de l'élément de verrouillage (2) de la seconde section (22a, 22b) de l'élément de verrouillage (2).

10. Element de fixation selon l'une quelconque des revendications précédentes, **caractérisé en ce que** la partie à fixer à l'aide de l'élément de fixation (1) sur la structure de retenue (7) est un sac à gaz ou un module de sac à gaz (200) pour un système de retenue d'occupant d'un véhicule automobile et la structure de retenue (7) est un élément du véhicule automobile.

11. Element de fixation selon l'une quelconque des revendications précédentes, **caractérisé en ce que** la partie à fixer à l'aide de l'élément de fixation (1) sur la structure de retenue (7) est un support de module (100) servant à retenir un module de sac à gaz (200).

12. Outil de verrouillage d'un élément de fixation (1) selon l'une quelconque des revendications précédentes sur une structure de retenue (7) de fixation, avec
- un élément d'introduction (501) pour l'introduction d'un élément de fixation (1) dans une ouverture (75) de la structure de retenue (7),
- l'élément d'introduction (501) présentant au moins un évidement (5011) dans lequel une section (24a, 24b, 25a, 25b) de l'élément de fixation (1) peut se déplacer, laquelle est déplacée lors de l'introduction de l'élément de fixation (1) dans l'ouverture (75) sous l'effet du bord (751) de l'ouverture (75) vers l'élément d'introduction (501).

13. Outil selon la revendication 12, **caractérisé en ce que** l'évidement (5011) réalise une ouverture (5013) dans une surface latérale (5012) de l'élément d'introduction (501).

14. Outil selon la revendication 12 ou 13, **caractérisé en ce que** l'évidement (5011) est réalisé comme une ouverture de passage s'étendant essentiellement transversalement au sens d'introduction.

15. Outil selon l'une quelconque des revendications 12 à 14, **caractérisé en ce que** l'élément d'introduction (501) est réalisé comme un corps creux.
